# FASCICULE DE BREVET EUROPEEN

(11) **EP 3 607 800 B1**
(45) Date de publication et mention de la délivrance du brevet: **17.03.2021**
(21) Numéro de dépôt: 18722112.2
(22) Date de dépôt: 30.03.2018
(51) Int. Cl.: H04W 74/08, H04W 4/00

(54) **SYSTÈME DE COMMUNICATION SANS FIL COMPORTANT UN CANAL PHYSIQUE D'ACCÈS ALÉATOIRE GLOBAL DANS LE TEMPS ET L'ESPACE**
DRAHTLOSKOMMUNIKATIONSSYSTEM MIT EINEM PHYSIKALISCHEN KANAL FÜR ÜBERGREIFENDEN DIREKTZUGRIFF IN ZEIT UND RAUM
WIRELESS COMMUNICATION SYSTEM COMPRISING A PHYSICAL CHANNEL FOR OVERALL RANDOM ACCESS IN TIME AND SPACE

(30) Priorité: 05.04.2017 FR 1752978
(43) Date de publication de la demande: 12.02.2020
(73) Titulaire: Sigfox, 31670 Labege (FR)
(72) Inventeur: MALLART, Raoul, 72012 Paris (FR); PONSARD, Benoit, 31000 Toulouse (FR); MANSUY, Arnaud, 31300 Toulouse (FR)
(74) Mandataire: Ipside
(86) Numéro de dépôt international: PCT/FR2018/050797
(87) Numéro de publication internationale: WO 2018/185407

(56) Documents cités:
- WO-A1-2016/171731

## Description

### DOMAINE TECHNIQUE

La présente invention appartient au domaine des systèmes de communication sans fil, et concerne plus particulièrement l'utilisation de réseaux d'accès cellulaires pour des applications du type M2M (acronyme anglo-saxon pour « Machine-to-Machine ») ou du type « Internet des objets » (« Internet of Things » ou IoT dans la littérature anglo-saxonne).

### ÉTAT DE LA TECHNIQUE

Dans le contexte par exemple de l'IoT, chaque objet de la vie de tous les jours a vocation à devenir un objet communicant, et est à cet effet équipé d'un terminal adapté à émettre des données à destination d'un réseau d'accès radio d'un système de communication sans fil.

Dans un tel contexte, il est important de disposer de solutions qui soient à la fois faible coût (donc faible complexité) et en même temps faiblement consommatrices en énergie électrique. Ceci permet par exemple de rendre communicants beaucoup d'objets de la vie de tous les jours sans impacter leur coût de production de façon significative, et surtout sans trop impacter leur autonomie lorsqu'ils sont opérés sur batterie.

De nos jours, on connaît de nombreux systèmes de communication sans fil dits « cellulaires », tels que les systèmes de communication sans fil GPRS, EDGE, UMTS, HSPA, HSPA+, LTE, CDMA2000, etc., qui sont actuellement mis en œuvre principalement pour des applications du type H2H (acronyme anglo-saxon pour « Human-to-Human »). De tels systèmes de communication sans fil cellulaires, outre qu'ils sont déjà massivement déployés, présentent l'avantage d'offrir des débits variables pouvant être très élevés, et d'utiliser des bandes de fréquences réservées qui leur garantissent un niveau d'interférences peu élevé, de sorte qu'il est naturel de chercher à les réutiliser également pour des applications du type M2M et/ou IoT.

De manière conventionnelle, un système de communication sans fil cellulaire comporte un réseau d'accès cellulaire comportant une pluralité de stations de base cellulaires. Chaque station de base cellulaire dessert une zone géographique prédéterminée, également connue sous le nom de « cellule », et la réunion de l'ensemble des zones géographiques desservies par les stations de base cellulaires forme une région géographique. Un réseau d'accès cellulaire est de type réseau étendu sans fil (« Wireless Wide Area Network » ou WWAN dans la littérature anglo-saxonne), c'est-à-dire que la région géographique desservie est de superficie importante, typiquement supérieure à 10000 km², voire supérieure à 50000 km².

Dans de tels systèmes de communication sans fil cellulaires, les échanges de données entre un terminal et le réseau d'accès cellulaire se font sur des canaux physiques à accès dit coordonné, c'est-à-dire que c'est le réseau d'accès cellulaire qui décide quand et avec quelle ressource radio le terminal peut échanger des données avec ledit réseau d'accès cellulaire. La procédure générale pour un terminal pour pouvoir échanger des données avec le réseau d'accès, sur un lien montant et/ou un lien descendant, consiste donc à effectuer une demande préalable de réservation de ressource radio au réseau d'accès cellulaire qui y répond en indiquant la ressource radio à utiliser. A la fin de l'échange de données, la ressource radio est libérée pour pouvoir être utilisée par d'autres terminaux.

Afin de permettre à chaque terminal de signaler au réseau d'accès cellulaire qu'il souhaite émettre des données sur le lien montant, par exemple dans le cas où ledit terminal souhaite effectuer un appel sortant, chaque station de base cellulaire met en place un canal physique d'accès dit aléatoire (« Physical Random Access Channel » ou PRACH dans la littérature anglo-saxonne). Un canal physique d'accès aléatoire correspond à une ressource radio qui est réservée sur un intervalle de temps prédéterminé et qui peut être utilisée par tout terminal pour émettre un message d'accès aléatoire par lequel un terminal se signale auprès de la station de base cellulaire.

Avant d'émettre le message d'accès aléatoire, un terminal doit écouter un canal physique de diffusion de la station de base cellulaire qui permet audit terminal de se synchroniser temporellement avec ladite station de base cellulaire, et qui permet également d'apprendre les différents paramètres du canal physique d'accès aléatoire de la station de base cellulaire (localisation temporelle de l'intervalle temporel et ressource radio réservée pour les messages d'accès aléatoires). Après avoir émis le message d'accès aléatoire, il s'ensuit un échange de plusieurs messages entre la station de base cellulaire et ledit terminal avant la réservation de ressource radio, visant notamment à identifier ledit terminal.

Afin de permettre à un terminal de recevoir un appel entrant, chaque terminal doit en principe être connecté à une station de base cellulaire dans la zone géographique de laquelle se trouve ledit terminal. Un système de communication sans fil cellulaire comporte un serveur de localisation cellulaire mémorisant, pour chaque terminal, une information de localisation représentative de la position dudit terminal par rapport au réseau d'accès cellulaire, par exemple sous la forme d'un identifiant de la dernière station de base cellulaire à laquelle s'est connecté ledit terminal. En cas d'appel entrant à destination d'un terminal, l'information de localisation permet de savoir quelle station de base cellulaire doit être utilisée pour notifier cet appel entrant audit terminal, sur un canal physique dit de « paging ». Après avoir été notifié d'un appel entrant, un terminal déroule les étapes décrites précédemment pour réserver une ressource radio pour pouvoir répondre à cet appel entrant.

La mobilité des terminaux est gérée par le biais de différentes procédures, dont les principales sont connues sous le nom de « cell reselection » (ré-sélection de cellule) et « location update » (mise à jour de localisation) dans la littérature anglo-saxonne.

Pour mettre en œuvre ces différentes procédures, le terminal doit se signaler régulièrement auprès du réseau d'accès cellulaire, de la même manière que dans le cas d'un appel sortant, c'est-à-dire par l'émission d'un message d'accès aléatoire sur le canal physique d'accès aléatoire. Ces procédures sont généralement initiées lorsque le terminal détecte qu'il s'est déplacé, par exemple en écoutant le réseau d'accès cellulaire et en déterminant qu'il est à présent plus proche d'une station de base cellulaire différente de la station de base cellulaire à laquelle il est connecté.

Si les différentes procédures décrites ci-dessus sont parfaitement bien maîtrisées et adaptées pour des applications du type H2H, qui nécessitent notamment des délais très courts pour l'établissement d'appels entrants, elles s'avèrent peu adaptées pour des applications du type M2M. En effet, ces régulièrement le réseau d'accès cellulaire, pour réserver des ressources radio, etc.) qui s'avère trop importante pour des applications de type M2M.

Afin d'adapter les systèmes de communication sans fil cellulaires existants, notamment LTE (« Long Term Evolution » dans la littérature anglo-saxonne), diverses approches sont envisagées.

Une première approche, connue sous le nom de eDRX (« Extended Discontinuous Réception » dans la littérature anglo-saxonne) permet à un terminal d'indiquer au réseau d'accès cellulaire qu'il n'écoutera le canal physique de « paging » qu'avec une période prédéterminée. De telles dispositions permettent de réduire la consommation électrique liée à l'écoute du canal physique de « paging », mais augmentent considérablement le délai d'établissement d'un appel entrant.

Une seconde approche, connue sous le nom de PSM (« Power Sleep Mode » dans la littérature anglo-saxonne) consiste à permettre au terminal de passer en mode veille pendant une durée importante, tout en conservant la connexion dudit terminal active du côté du réseau d'accès cellulaire. Ainsi, lorsque le terminal quitte le mode veille, il ne doit pas nécessairement se connecter à nouveau au réseau d'accès cellulaire, puisque sa connexion a été conservée. De telles dispositions permettent de réduire la consommation électrique du terminal, qui peut alors rester longtemps en mode veille, mais posent des problèmes de gestion de la mobilité du terminal puisque la connexion reste active même si le terminal s'est déplacé dans une zone géographique desservie par une autre station de base cellulaire. Le document WO 2016/171731 A1 (NOKIA TECHNOLOGIES OY [FI]; NOKIA USA INC [US]) 27 octobre 2016 (2016-10-27) décrit des méthodes appliquées à un canal d'accès aléatoire pour améliorer la fiabilité de l'établissement d'une communication entre un terminal et une station de base dans le contexte du système de communication sans fil LTE.

### EXPOSÉ DE L'INVENTION

La présente invention a pour objectif de remédier à tout ou partie des limitations des solutions de l'art antérieur, notamment celles exposées ci-avant, en proposant une solution qui permette de réduire la quantité d'opérations à effectuer par un terminal pour se signaler dans un système de communication sans fil comportant un réseau d'accès cellulaire.

En outre, la présente invention a également pour objectif de proposer une solution qui permette, au moins dans certains modes de mise en œuvre, de réduire la quantité de messages à échanger pour gérer la mobilité d'un terminal par rapport à un réseau d'accès cellulaire.

A cet effet, et selon un premier aspect, l'invention concerne un système de communication sans fil tel que décrit par la revendication 1.

Ainsi, le canal physique d'accès aléatoire est permanent, c'est-à-dire qu'il existe de manière continue, sans interruption, contrairement aux systèmes de communication sans fil cellulaires de l'art antérieur dans lesquels le canal physique d'accès aléatoire est limité à un intervalle temporel de durée limitée. Aucune synchronisation temporelle n'est donc nécessaire pour émettre sur un message d'accès aléatoire, puisqu'il est possible d'émettre à n'importe quel instant sur ledit le canal physique permanent d'accès aléatoire.

En outre, tous les canaux physiques permanents d'accès aléatoire utilisent la même ressource radio (bande ou sous-bande fréquentielle, code d'étalement et/ou d'embrouillage, etc.) dans la région géographique, contrairement aux systèmes de communication sans fil cellulaires existants dans lesquels des stations de base cellulaires différentes utilisent des ressources radio différentes pour leurs canaux physiques d'accès aléatoire respectifs, ou à tout le moins dans lesquels la ressource radio à utiliser dépend de la zone géographique dans laquelle se trouve le terminal. La ressource radio utilisée par les canaux physiques permanents d'accès aléatoire peut donc être préalablement mémorisée par le terminal. Une fois cette ressource radio mémorisée, il n'est plus nécessaire pour le terminal d'écouter un canal physique de diffusion avant d'émettre un message d'accès aléatoire, puisque cette ressource radio est valable dans toute la région géographique.

Par conséquent de telles dispositions sont particulièrement avantageuses dans la mesure où un terminal, quelle que soit sa position dans la région géographique, peut toujours émettre spontanément un message d'accès aléatoire en utilisant la ressource radio qui est connue a priori. En d'autres termes, les stations de base d'accès aléatoire forment un canal physique d'accès aléatoire qui est global à la fois dans le temps (permanent) et dans l'espace (disponible dans toute la région géographique).

Dans des modes particuliers de réalisation, le système de communication sans fil peut comporter en outre l'une ou plusieurs des caractéristiques suivantes, prises isolément ou selon toutes les combinaisons techniquement possibles.

Dans des modes particuliers de réalisation, un terminal est configuré pour émettre un message d'accès aléatoire sur le canal physique permanent d'accès aléatoire, ledit message d'accès aléatoire comportant un code d'identification spécifique dudit terminal.

Ainsi, le message d'accès aléatoire, c'est-à-dire le message par lequel le terminal se signale auprès des stations de base d'accès aléatoire, permet d'identifier sans ambiguïté le terminal ayant émis ledit message d'accès aléatoire, c'est-à-dire qu'il permet de le distinguer de tous les autres terminaux.

Au contraire, dans les systèmes de communication sans fil cellulaires de l'art antérieur, le message d'accès aléatoire ne permet pas d'identifier sans ambiguïté le terminal l'ayant émis, et plusieurs messages doivent être échangés à la fois sur le lien montant et sur le lien descendant pour arriver à identifier de manière non ambigüe ledit terminal. Ceci s'explique notamment par le fait que, les canaux physiques d'accès aléatoire de l'art antérieur n'étant pas permanents, la quantité d'informations incluses dans le message d'accès aléatoire est extrêmement limitée afin de permettre à plusieurs terminaux d'émettre un message d'accès aléatoire au cours de l'intervalle temporel correspondant audit canal physique d'accès aléatoire.

Dans le système de communication sans fil objet de l'invention, le canal physique d'accès aléatoire est permanent, de sorte que la quantité d'informations incluses dans le message d'accès aléatoire peut être plus importante et peut permettre d'identifier de manière non ambigüe ledit terminal au moyen d'un seul message, voire peut permettre d'authentifier ledit terminal. Par « un seul message » on entend que le terminal peut être identifié de manière non ambigüe (et, le cas échéant, authentifié) sans avoir à échanger de messages sur le lien descendant. Le message d'accès aléatoire peut cependant être découpé en sous-messages émis de manière discontinue dès lors qu'il n'y a pas de message émis sur le lien descendant entre les émissions par le terminal de deux sous-messages du message d'accès aléatoire.

Dans des modes particuliers de réalisation, chaque station de base cellulaire comporte un canal physique transitoire d'accès aléatoire utilisant une ressource radio différente de la ressource radio du canal physique permanent d'accès aléatoire, les canaux physiques transitoires d'accès aléatoire desdites stations de base cellulaires utilisant des ressources radio différentes.

En d'autres termes, le canal physique permanent d'accès aléatoire, qui est global dans le temps et dans l'espace, peut être mis en œuvre en complément des canaux physiques d'accès aléatoire selon l'art antérieur, à durée limitée et qui utilisent des ressources radio différentes qui dépendent de la zone géographique dans laquelle se trouve le terminal.

Dans des modes particuliers de réalisation, tout ou partie des stations de base cellulaires sont également des stations de base d'accès aléatoire.

Dans des modes particuliers de réalisation, tout ou partie des stations de base d'accès aléatoire forment un réseau d'accès dit aléatoire distinct du réseau d'accès cellulaire, ledit réseau d'accès aléatoire étant relié au cœur de réseau cellulaire.

Dans des modes particuliers de réalisation, les stations de base cellulaires et les stations de base d'accès aléatoire du réseau d'accès aléatoire sont configurées pour utiliser des protocoles de couche physique différents pour les canaux physiques d'accès coordonné et pour les canaux physiques permanents d'accès aléatoire.

Dans des modes particuliers de réalisation, les terminaux et les stations de base d'accès aléatoire du réseau d'accès aléatoire sont configurés pour échanger des données sous la forme de signaux radio à bande ultra-étroite.

Dans des modes particuliers de réalisation, le système de communication sans fil comporte un serveur de localisation cellulaire mémorisant, pour chaque terminal, une information de localisation représentative de la position dudit terminal par rapport au réseau d'accès cellulaire, et ledit serveur de localisation cellulaire est configuré pour mettre à jour l'information de localisation d'un terminal en fonction d'un message d'accès aléatoire émis par ledit terminal sur le canal physique permanent d'accès aléatoire et reçu par une station de base d'accès aléatoire.

Selon un second aspect, l'invention concerne un procédé de gestion de mobilité d'un terminal d'un système de communication sans fil selon la revendication 8.

De telles dispositions sont particulièrement avantageuses en ce que l'information de localisation du terminal peut être mise à jour sans que le terminal n'ait à écouter le réseau d'accès cellulaire.

Dans des modes particuliers de mise en œuvre, le procédé de gestion de mobilité peut comporter en outre l'une ou plusieurs des caractéristiques suivantes, prises isolément ou selon toutes les combinaisons techniquement possibles.

Dans des modes particuliers de mise en œuvre, l'information de localisation actualisée du terminal est déterminée en fonction d'une information de localisation d'au moins une station de base d'accès aléatoire ayant reçu ledit message d'accès aléatoire.

Dans des modes particuliers de mise en œuvre, le procédé de gestion de mobilité comporte une évaluation, par le serveur de localisation cellulaire, d'un critère prédéfini de mobilité du terminal par comparaison de l'information de localisation actualisée avec l'information de localisation mémorisée par ledit serveur de localisation cellulaire et, lorsque le critère de mobilité est vérifié :
- une émission, à destination du terminal, de paramètres d'accès au réseau d'accès cellulaire à utiliser pour la position actuelle du terminal par rapport au réseau d'accès cellulaire,
- une mémorisation, par le terminal, desdits paramètres d'accès au réseau d'accès cellulaire reçus.

Dans des modes particuliers de mise en œuvre, le procédé de gestion de mobilité comporte des étapes préalables de connexion du terminal avec le réseau d'accès cellulaire et de mise en veille d'un module de communication cellulaire dudit terminal, et le message d'accès aléatoire est émis lorsque ledit module de communication cellulaire est en veille et lorsqu'un critère prédéfini d'émission, évalué par le terminal, est vérifié.

Dans des modes particuliers de mise en œuvre, le message d'accès aléatoire comporte un code d'identification spécifique dudit terminal.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un mode préféré de réalisation d'un système de communication sans fil,
- Figure 2 : une représentation schématique d'un exemple de répartition géographique de stations de base cellulaires d'un réseau d'accès cellulaire et de stations de base d'accès aléatoire d'un réseau d'accès aléatoire,
- Figure 3 : un diagramme illustrant les principales étapes d'un exemple de mise en œuvre d'un procédé de gestion de mobilité d'un terminal dans un système de communication sans fil,
- Figure 4: un diagramme illustrant les principales étapes d'un mode préféré de mise en œuvre d'un procédé de gestion de mobilité.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

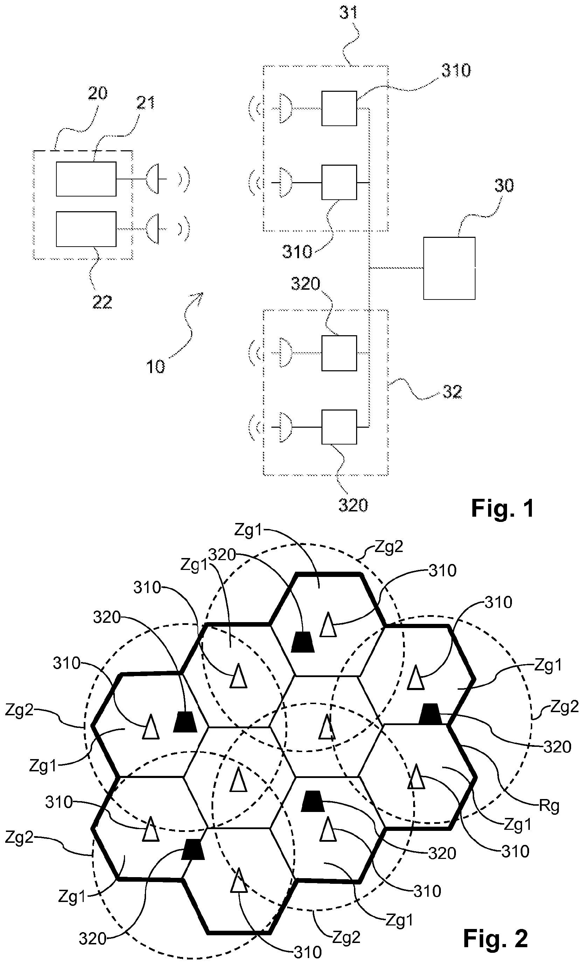

La figure 1 représente schématiquement un mode préféré de réalisation d'un système 10 de communication sans fil. Tel qu'illustré par la figure 1, le système 10 de communication sans fil comporte un réseau d'accès 31 cellulaire relié à un cœur de réseau cellulaire 30.

Le réseau d'accès 31 cellulaire comporte une pluralité de stations de base 310 dites cellulaires. Chaque station de base 310 cellulaire dessert une zone géographique Zg1 prédéterminée, également connue sous le nom de « cellule », et la réunion de l'ensemble des zones géographiques Zg1 desservies par les stations de base 310 cellulaires forme une région géographique Rg.

Tel qu'indiqué précédemment, un réseau d'accès 31 cellulaire est de type réseau étendu sans fil (WWAN), c'est-à-dire que la région géographique Rg desservie est de superficie importante, typiquement supérieure à 10000 km², voire supérieure à 50000 km².

Les stations de base 310 cellulaires sont adaptées à échanger des données avec des terminaux 20. Tel qu'indiqué précédemment, les échanges de données entre un terminal 20 et le réseau d'accès 31 cellulaire se font sur des canaux physiques à accès dit coordonné, c'est-à-dire que c'est le réseau d'accès 31 cellulaire et/ou le cœur de réseau cellulaire 30 qui décide(nt) quand et avec quelle ressource radio le terminal 20 peut échanger des données avec ledit réseau d'accès 31 cellulaire.

Le réseau d'accès 31 cellulaire est par exemple un réseau d'accès GPRS, EDGE, UMTS, HSPA, HSPA+, LTE, CDMA2000, etc. De manière générale, tout type de réseau d'accès 31 cellulaire peut être utilisé dans le système 10 de communication sans fil, dès lors qu'il répond aux principes généraux des réseaux d'accès cellulaires rappelés ci-dessus, à savoir de type réseau étendu sans fil avec un découpage en zone géographiques (cellules) de la région géographique desservie et d'échange de données principalement sur des canaux physiques à accès coordonné. Cela inclut notamment tous les réseaux d'accès cellulaires existants, mais également leurs évolutions futures.

Dans la suite de la description, on se place de manière non limitative dans le cas où le réseau d'accès 31 cellulaire est de type LTE (« Long Term Evolution »). Dans un tel contexte, le réseau d'accès 31 cellulaire est également connu sous le nom de E-UTRAN (« Evolved-Universal Terrestrial Access Network » dans la littérature anglo-saxonne), les stations de base 310 cellulaires sous le nom de EnodeB (« Evolved Node B »), et le cœur de réseau cellulaire 30 sous le nom de EPC (« Evolved Packet Core »).

Le système 10 de communication sans fil comporte également, dans des modes préférés de réalisation, un serveur de localisation cellulaire (non représenté sur les figures) qui appartient par exemple au cœur de réseau cellulaire 30. Le serveur de localisation cellulaire, connu sous le nom de MME (« Mobility Management Entity » dans la littérature anglo-saxonne) dans le cas d'un réseau d'accès LTE, mémorise, pour chaque terminal 20, une information de localisation représentative de la position dudit terminal par rapport au réseau d'accès 31 cellulaire. Par exemple, l'information de localisation d'un terminal 20 correspond à un identifiant de la dernière station de base 310 cellulaire à laquelle s'est connecté ledit terminal 20.

Tel qu'illustré par la figure 1, le système 10 de communication sans fil comporte également un second réseau d'accès sans fil distinct du réseau d'accès 31 cellulaire et relié au cœur de réseau cellulaire 30, désigné ci-après par « réseau d'accès 32 aléatoire ».

Le réseau d'accès 32 aléatoire comporte des stations de base 320 dites d'accès aléatoire qui desservent la même région géographique Rg que les stations de base 310 cellulaires.

La figure 2 représente schématiquement un exemple de répartition géographique des stations de base 310 cellulaires et des stations de base 320 d'accès aléatoire dans la région géographique Rg. Tel qu'illustré par la figure 2, chaque station de base 320 d'accès aléatoire dessert une zone géographique Zg2 prédéterminée, et la réunion de l'ensemble des zones géographiques Zg2 couvre la région géographique Rg.

Chaque station de base 320 d'accès aléatoire est adaptée à recevoir des données émises par des terminaux 20 sur un canal physique permanent dit d'accès aléatoire. En d'autres termes, le canal physique permanent d'accès aléatoire est disponible sans interruption dans le temps pour recevoir notamment des messages d'accès aléatoire émis par des terminaux 20.

En outre, les canaux physiques permanents d'accès aléatoire desdites stations de base 320 d'accès aléatoire utilisent une même ressource radio dans toute la région géographique. Par « ressource radio », on entend par exemple une bande fréquentielle prédéterminée ou une sous-bande fréquentielle prédéterminée (par exemple une porteuse d'un signal OFDMA ou « Orthogonal Frequency Division Multiple Access » dans la littérature anglo-saxonne), un code d'étalement et/ou d'embrouillage prédéterminé, etc.

Ainsi, les stations de base 320 d'accès aléatoire du réseau d'accès 32 aléatoire forment un canal physique d'accès aléatoire qui est global à la fois dans le temps, puisqu'il est permanent et disponible sans interruption, mais également dans l'espace puisque la même ressource radio est utilisée dans toute la région géographique (la ressource radio à utiliser est indépendante de la zone géographique Zg1, Zg2 dans laquelle se trouve un terminal 20). Par conséquent, chaque terminal 20, quelle que soit sa position dans la région géographique Rg, peut toujours émettre spontanément un message d'accès aléatoire en utilisant cette ressource radio, qui est connue a priori.

Il est à noter qu'on entend par « accès aléatoire » que l'accès à la ressource radio utilisée par tous les canaux physiques permanents d'accès aléatoire n'est pas coordonné par le réseau d'accès 32 aléatoire. C'est au contraire les terminaux 20 qui décident seuls, sans autorisation préalable dudit réseau d'accès 32 aléatoire, quand ils émettent un message d'accès aléatoire sur un canal physique permanent d'accès aléatoire. Par exemple, la méthode d'accès aux canaux physiques permanents d'accès aléatoire est du type Aloha ou CSMA (« Carrier Sense Multiple Access »), etc.

Lesdits canaux physiques d'accès aléatoire étant permanents, le multiplexage des terminaux 20 sur lesdits canaux physiques permanents d'accès aléatoire est principalement temporel. Toutefois, rien n'exclut de coupler le multiplexage temporel (statistique) à un autre type de multiplexage.

Par exemple, la ressource radio utilisée par tous les canaux physiques permanents d'accès aléatoire peut être une bande fréquentielle prédéterminée de largeur ΔF (par exemple de l'ordre de quelques centaines de kilohertz) très supérieure (au moins un facteur 10) à la largeur fréquentielle δF des messages d'accès aléatoire émis par les terminaux 20. Dans un tel cas, il est possible pour le terminal 20 de sélectionner en outre de manière aléatoire une sous-bande fréquentielle particulière de largeur δF, à l'intérieur de la bande fréquentielle, pour émettre un message d'accès aléatoire. Le cas échéant, les terminaux 20 sont également multiplexés en fréquences (statistiquement) à l'intérieur de ladite bande fréquentielle de largeur ΔF.

Suivant un autre exemple, un même ensemble prédéterminé de codes d'étalement ou d'embrouillage différents peut être utilisé par tous les canaux physiques permanents d'accès aléatoire. Dans un tel cas, il est possible pour le terminal 20 de sélectionner en outre de manière aléatoire un code d'étalement ou d'embrouillage, parmi l'ensemble prédéterminé de codes d'étalement ou d'embrouillage, pour émettre un message d'accès aléatoire. Le cas échéant, les terminaux 20 sont également multiplexés en codes (statistiquement) parmi l'ensemble prédéterminé de codes d'étalement ou d'embrouillage.

Il est à noter en outre que les réseaux d'accès cellulaires existants disposent généralement déjà de canaux physiques d'accès aléatoire. Par exemple, dans un réseau d'accès LTE, chaque station de base 310 cellulaire met en place un canal physique d'accès aléatoire PRACH (« Physical Random Access Channel »). Toutefois, contrairement aux canaux physiques permanents d'accès aléatoire du réseau d'accès 32 aléatoire, les canaux physiques d'accès aléatoire PRACH sont transitoires (c'est-à-dire non permanents de sorte qu'ils nécessitent une synchronisation temporelle des terminaux avec les stations de base 310 cellulaires) et utilisent des ressources radio différentes, c'est-à-dire que la ressource radio à utiliser dépend de la station de base 310 cellulaire dans la zone géographique Zg1 de laquelle se trouve le terminal 20. Pour émettre sur un canal physique d'accès aléatoire PRACH du réseau d'accès 31 cellulaire, un terminal 20 doit donc nécessairement écouter au préalable un canal physique de diffusion émis par la station de base 310 cellulaire, pour se synchroniser temporellement avec celle-ci et apprendre les paramètres dudit canal physique d'accès aléatoire PRACH (localisation temporelle de l'intervalle temporel et ressource radio réservée pour les messages d'accès aléatoires).

Dans l'exemple illustré par la figure 1, dans lequel les stations de base 320 d'accès aléatoire appartiennent à un réseau d'accès 32 aléatoire distinct du réseau d'accès 31 cellulaire, les stations de base 310 cellulaires et les stations de base 320 d'accès aléatoire sont de préférence configurées pour utiliser des protocoles de couche physique différents, et chaque terminal 20 comporte deux modules de communication distincts :
- un module de communication 21 cellulaire adapté à échanger des données avec les stations de base 310 cellulaires, et
- un module de communication 22 d'accès aléatoire adapté à échanger de données avec les stations de base 320 d'accès aléatoire.

Par exemple, le réseau d'accès 31 cellulaire est un réseau d'accès LTE et le réseau d'accès 32 aléatoire est un réseau d'accès à bande ultra étroite. Par « bande ultra étroite » (« Ultra Narrow Band » ou UNB dans la littérature anglo-saxonne), on entend que le spectre fréquentiel instantané des signaux échangés (y compris les messages d'accès aléatoire) entre les terminaux 20 et le réseau d'accès 32 aléatoire est de largeur fréquentielle inférieure à deux kilohertz, voire inférieure à un kilohertz. L'émission de tels signaux peut être réalisée avec une consommation électrique très réduite. En outre, il est possible avec de tels signaux d'effectuer un multiplexage fréquentiel (statistique) de nombreux terminaux 20 dans une bande fréquentielle de largeur ΔF de quelques centaines de kilohertz.

Dans l'exemple illustré par la figure 1, le réseau d'accès 32 aléatoire (par exemple UNB) vient donc complémenter le réseau d'accès 31 cellulaire (par exemple LTE) pour y ajouter un canal physique d'accès aléatoire global dans le temps et dans l'espace.

Le canal physique permanent d'accès aléatoire fourni par les stations de base 320 d'accès aléatoire trouve de nombreuses applications, et peut être utilisé notamment pour gérer la mobilité d'un terminal 20 par rapport au réseau d'accès 31 cellulaire, ou encore pour interroger ledit réseau d'accès 31 cellulaire et/ou le cœur de réseau cellulaire 30 pour savoir si le terminal 20 doit établir un canal physique d'accès coordonné avec le réseau d'accès 31 cellulaire pour recevoir des donnés, etc.

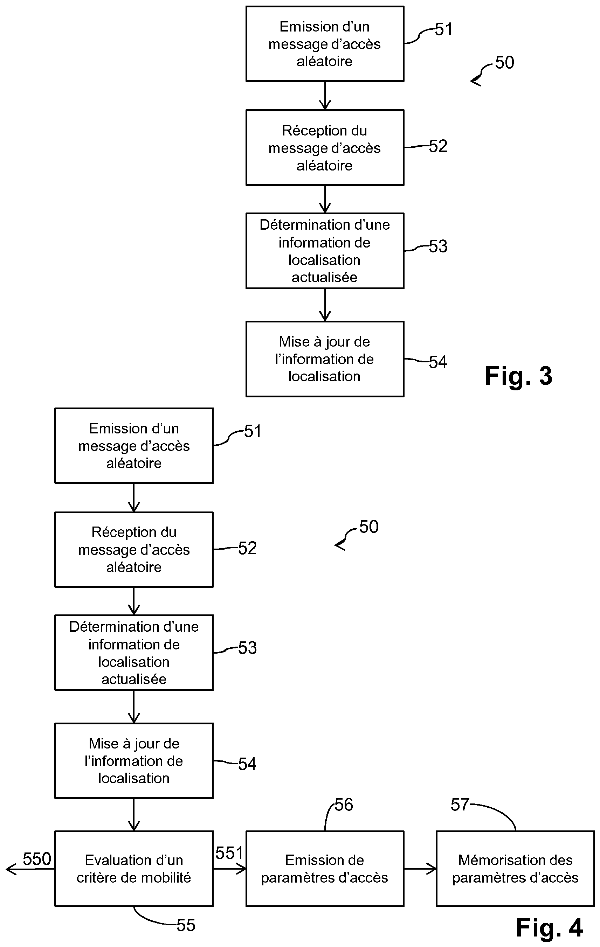

La figure 3 représente schématiquement les principales étapes d'un procédé 50 de gestion de mobilité d'un terminal 20 dans un système 10 de communication sans fil tel que décrit précédemment. Tel qu'illustré par la figure 3, le procédé 50 de gestion de mobilité comporte des étapes de :
- 51 émission, par le terminal 20, d'un message d'accès aléatoire sur le canal physique permanent d'accès aléatoire,
- 52 réception, par au moins une station de base 320 d'accès aléatoire, du message d'accès aléatoire émis par ledit terminal 20,
- 53 détermination d'une information de localisation actualisée dudit terminal 20 en fonction dudit message d'accès aléatoire reçu dudit terminal 20,
- 54 mise à jour, par le serveur de localisation cellulaire, de l'information de localisation du terminal 20 mémorisée dans ledit serveur de localisation cellulaire en fonction de l'information de localisation actualisée.

Ainsi, le message d'accès aléatoire émis par le terminal 20 et reçu par au moins une station de base 320 d'accès aléatoire est utilisé pour mettre à jour l'information de localisation du terminal 20 mémorisée dans le serveur de localisation cellulaire.

Par exemple, si terminal 20 est équipé ou relié à un module de géolocalisation, par exemple de type GPS (« Global Positioning System »), alors le terminal 20 peut inclure directement dans le message d'accès aléatoire sa position telle que déterminée par le module de géolocalisation. Une fois ledit message d'accès aléatoire reçu par une station de base 320 d'accès aléatoire, ladite position peut être extraite du message d'accès aléatoire pour déterminer l'information de localisation actualisée dudit terminal 20.

Suivant un autre exemple, il est possible de déterminer l'information de localisation actualisée du terminal 20 en fonction d'une information de localisation d'au moins une station de base 320 d'accès aléatoire ayant reçu ledit message d'accès aléatoire.

En effet, l'information de localisation d'une station de base 320 d'accès aléatoire, qui est représentative de la position de ladite station de base 320 d'accès aléatoire, permet de déduire, au cours de l'étape 53, une station de base 310 cellulaire qui se trouve à proximité de ladite station de base 320 d'accès aléatoire ayant reçu le message d'accès aléatoire. Un identifiant de cette station de base 310 cellulaire est par exemple utilisé comme information de localisation actualisée dudit terminal 20.

De manière plus générale, toute information de localisation représentative de la position d'une station de base 320 d'accès aléatoire peut être utilisée pour déterminer l'information de localisation actualisée du terminal 20. Par exemple, il est possible de mémoriser une table associant, à chaque station de base 320 d'accès aléatoire, une ou plusieurs stations de base 310 cellulaires se trouvant à proximité de ladite station de base 320 d'accès aléatoire. Dans un tel cas, l'information de localisation de la station de base 320 d'accès aléatoire correspond directement à un identifiant de cette station de base d'accès aléatoire.

Il est également à noter que le message d'accès aléatoire émis par le terminal 20 peut être reçu par plusieurs stations de base 320 d'accès aléatoire. Dans ce cas, il est possible, au cours de l'étape 53, d'utiliser les informations de localisation de plusieurs stations de base 320 d'accès aléatoire afin d'identifier par exemple une station de base 310 cellulaire se trouvant à l'intersection de zones géographiques d'au moins deux desdites stations de base 320 d'accès aléatoire ayant reçu le message d'accès aléatoire. Alternativement, il est possible d'utiliser les informations de localisation de plusieurs stations de base 320 d'accès aléatoire ayant reçu le message d'accès aléatoire, ainsi que des paramètres de réception dudit message d'accès aléatoire par chacune de ces stations de base 320 d'accès aléatoire (niveau de puissance de réception, instant de réception, fréquence de réception, etc.) pour estimer de manière conventionnelle la position dudit terminal 20. La position estimée dudit terminal 20 est alors utilisée pour déterminer l'information de localisation actualisée dudit terminal 20.

Dans des modes préférés de réalisation, le message d'accès aléatoire émis par un terminal 20 sur le canal physique permanent d'accès aléatoire comporte un code d'identification spécifique dudit terminal 20, c'est-à-dire un code d'identification unique, permettant de distinguer ledit terminal 20 de tous les autres terminaux 20. Par conséquent, le terminal 20 peut être identifié au moyen d'un seul message, en l'occurrence le message d'accès aléatoire par lequel le terminal 20 initie la procédure d'accès aléatoire.

Le message d'accès aléatoire peut également comporter des informations permettant au réseau d'accès 32 aléatoire d'authentifier ledit terminal 20. Le cas échéant, le terminal 20 peut être à la fois identifié et authentifié au moyen du seul message d'accès aléatoire, ce qui permet de limiter grandement les échanges de messages à effectuer par le terminal 20, et donc contribue à limiter sa consommation électrique.

Dans le cas du procédé 50 de gestion de mobilité, il est donc alors possible de mettre à jour l'information de localisation d'un terminal 20 par rapport au réseau d'accès 31 cellulaire au moyen d'un seul message d'accès aléatoire émis par ce terminal 20 sur le canal physique permanent d'accès aléatoire. A titre de comparaison, dans le cas d'une procédure de « location update » selon l'art antérieur, il est parfois nécessaire d'échanger une dizaine de messages en tout, sur le lien descendant et le lien montant du réseau d'accès 31 cellulaire, pour pouvoir mettre à jour l'information de localisation.

Il est en outre à noter que cette mise jour est en outre être réalisée sans aucune interaction entre le terminal 20 et le réseau d'accès 31 cellulaire, et peut donc être réalisée en conservant le module de communication 21 cellulaire dudit terminal 20 en mode veille. Le procédé 50 de gestion de mobilité peut donc être mis en œuvre, notamment, en complément de l'approche PSM décrite précédemment, afin de bénéficier des avantages de celle-ci en termes de consommation électrique tout en améliorant la gestion de la mobilité des terminaux 20 par rapport au réseau d'accès 31 cellulaire. Le terminal 20 utilise à cet effet le module de communication 22 d'accès aléatoire (par exemple UNB) qui présente avantageusement une consommation électrique inférieure à celle du module de communication 21 cellulaire.

De préférence, l'étape 51 d'émission, par le terminal 20 est exécutée à la discrétion dudit terminal 20, et uniquement lorsqu'un critère d'émission prédéterminé évalué par le terminal 20 est vérifié. En d'autres termes, c'est le terminal 20 qui est maître de la mise à jour de l'information de localisation et qui décide seul quand émettre le message d'accès aléatoire. Le terminal 20 maîtrise la consommation électrique associée à la mise à jour de l'information de localisation mémorisée dans le serveur de localisation cellulaire.

Différents types de critère d'émission peuvent être envisagés, et le choix d'un critère d'émission particulier ne constitue qu'une variante d'implémentation. Par exemple, le critère d'émission peut être considéré comme vérifié :
- lorsqu'une période d'émission prédéfinie expire après l'émission du précédent message d'accès aléatoire, et/ou
- lorsque le terminal 20, par exemple équipé d'un accéléromètre ou de tout autre moyen de détection de mouvement, détecte qu'il s'est déplacé, etc.

La figure 4 représente schématiquement les principales étapes d'un mode préféré de mise en œuvre d'un procédé 50 de gestion de mobilité. Outre les étapes décrites en référence à la figure 3, le procédé 50 de gestion de mobilité comporte une étape 55 d'évaluation, par le serveur de localisation cellulaire, d'un critère prédéfini de mobilité du terminal 20 par comparaison de l'information de localisation actualisée avec l'information de localisation mémorisée par ledit serveur de localisation cellulaire. Lorsque le critère de mobilité n'est pas vérifié (référence 550 sur la figure 4), le procédé 50 de gestion de mobilité peut s'arrêter. Dans le cas contraire (référence 551 sur la figure 4), le procédé 50 de gestion de mobilité comporte des étapes de :
- 56 émission, à destination du terminal 20, de nouveaux paramètres d'accès au réseau d'accès 31 cellulaire à utiliser pour la position actuelle du terminal 20 par rapport au réseau d'accès 31 cellulaire,
- 57 mémorisation, par le terminal 20, desdits paramètres d'accès au réseau d'accès cellulaire reçus.

L'évaluation du critère de mobilité vise principalement à déterminer si le terminal 20 s'est déplacé dans la zone géographique Zg1 d'une station de base 310 cellulaire différente de la dernière station de base 310 cellulaire à laquelle ledit terminal 20 s'est connecté. Différents types de critère de mobilité peuvent être envisagés, et le choix d'un critère de mobilité particulier ne constitue qu'une variante d'implémentation. Par exemple, le critère de mobilité peut être considéré comme vérifié :
- dès que l'information de localisation actualisée diffère de l'information de localisation préalablement mémorisée dans le serveur de localisation cellulaire, ou
- lorsque le terminal 20 s'est déplacé dans la zone géographique d'une station de base 310 cellulaire qui n'est pas voisine de la dernière station de base 310 cellulaire à laquelle ledit terminal 20 s'est connecté, etc.

Les paramètres d'accès au réseau d'accès 31 cellulaire émis à destination du terminal 20 correspondent à tout type d'information permettant d'accélérer la connexion dudit terminal 20 à la station de base 310 cellulaire dans la zone géographique Zg1 de laquelle ledit terminal 20 s'est déplacé, notamment au réveil du module de communication 21 cellulaire dudit terminal 20 s'il était en mode veille au cours du déplacement. Par exemple, les paramètres d'accès peuvent comporter :
- l'information de localisation actualisée du terminal 20, et/ou
- une information sur une ressource radio utilisée par un canal physique de diffusion de la station de base 310 cellulaire dans la zone géographique Zg1 de laquelle le terminal 20 s'est déplacé,
- une ou plusieurs informations diffusées sur le canal physique de diffusion, notamment celles qui visent à contrôler l'accès sur le canal physique d'accès aléatoire PRACH (par exemple un niveau minimal de puissance de réception à vérifier avant d'émettre sur le canal physique d'accès aléatoire PRACH et/ou un niveau maximal de puissance d'émission à respecter sur ledit canal physique d'accès aléatoire PRACH, etc.), etc.

Les paramètres d'accès sont émis par le réseau d'accès 32 aléatoire et/ou par le réseau d'accès 31 cellulaire. Par exemple, si la quantité d'informations représentée par les paramètres d'accès est faible, ils peuvent être émis à destination du terminal 20 par une station de base 320 d'accès aléatoire. Dans le cas contraire, ils sont de préférence émis par une station de base 310 cellulaire. Le cas échéant, si le module de communication 21 cellulaire du terminal 20 est en mode veille, il est possible d'émettre, au moyen d'une station de base 320 d'accès aléatoire, un message de réveil à destination dudit terminal 20. Lorsqu'il reçoit un message de réveil, le terminal 20 active le module de communication 21 cellulaire pour recevoir les paramètres d'accès via une station de base 310 cellulaire du réseau d'accès 31 cellulaire.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant principalement le cas où les stations de base 320 d'accès aléatoire sont utilisées pour la gestion de mobilité du terminal 20. Toutefois, et tel qu'indiqué précédemment, d'autres applications sont envisageables. Notamment, l'émission d'un message d'accès aléatoire sur le canal physique permanent d'accès aléatoire par un terminal 20 peut être utilisée pour demander au réseau d'accès 31 cellulaire et/ou au cœur de réseau cellulaire 30 si des données y sont en attente de transmission à destination dudit terminal 20. Le cas échéant, si le module de communication 21 cellulaire du terminal 20 est en mode veille, il est possible d'émettre, au moyen d'une station de base 320 d'accès aléatoire, un message de réveil à destination dudit terminal 20. Lorsqu'il reçoit un message de réveil, le terminal 20 active le module de communication 21 cellulaire pour recevoir lesdites données. L'émission du message de réveil par le réseau d'accès 32 aléatoire remplace dans ce cas le canal physique de « paging » du réseau d'accès 31 cellulaire de sorte que, par rapport à l'approche eDRX décrite précédemment, le terminal 20 peut contrôler le délai d'établissement d'un appel entrant par l'émission d'un message d'accès aléatoire à destination du réseau d'accès 32 aléatoire.

En outre, l'invention a été décrite en considérant le cas où les stations de base 320 d'accès aléatoire appartiennent à un réseau d'accès 32 aléatoire distinct du réseau d'accès 31 cellulaire. Rien n'exclut, suivant d'autres exemples, d'avoir tout ou partie des stations de base 310 cellulaires qui sont également des stations de base 320 d'accès aléatoire. Une station de base 310 cellulaire qui est également une station de base 320 d'accès aléatoire comporte donc à la fois un canal physique transitoire d'accès aléatoire et un canal physique permanent d'accès aléatoire.

Egalement, l'invention a été décrite en considérant que la région géographique Rg correspond à toute la région géographique desservie par le réseau d'accès 31 cellulaire. Toutefois, l'invention est applicable de manière plus générale à toute région géographique de superficie importante formée par plusieurs zones géographiques dans lesquelles les canaux physiques transitoires d'accès aléatoire utilisent des ressources radio différentes.

## Revendications

1. Système (10) de communication sans fil comportant un réseau d'accès (31) cellulaire relié à un cœur de réseau cellulaire (30), ledit réseau d'accès cellulaire comportant des stations de base (310) dites cellulaires adaptées à échanger des données avec des terminaux (20) sur des canaux physiques dits d'accès coordonné, chaque station de base (310) cellulaire desservant une zone géographique (Zg1), l'ensemble des zones géographiques desservies par lesdites stations de base cellulaires formant une région géographique (Rg), **caractérisé en ce que** le système (10) de communication sans fil comporte des stations de base (320) dites d'accès aléatoire desservant la région géographique desservie par le réseau d'accès (31) cellulaire, chaque station de base (320) d'accès aléatoire étant adaptée à recevoir des données émises par des terminaux sur un canal physique permanent, c'est-à-dire existant de manière continue, sans interruption dans le temps, dit d'accès aléatoire, les canaux physiques permanents d'accès aléatoire desdites stations de base d'accès aléatoire utilisant une même ressource radio dans toute la région géographique et permettant à un terminal (20) d'émettre un message d'accès aléatoire à n'importe quel instant sans qu'une synchronisation temporelle ne soit nécessaire entre le terminal et une station de base (320) d'accès aléatoire.

2. Système (10) selon la revendication 1, comportant un terminal (20) configuré pour émettre un message d'accès aléatoire sur le canal physique permanent d'accès aléatoire, ledit message d'accès aléatoire comportant un code d'identification spécifique dudit terminal.

3. Système (10) selon l'une des revendications précédentes, dans lequel tout ou partie des stations de base cellulaires sont également des stations de base d'accès aléatoire.

4. Système (10) selon l'une des revendications précédentes, dans lequel tout ou partie des stations de base d'accès aléatoire forment un réseau d'accès dit aléatoire distinct du réseau d'accès cellulaire, ledit réseau d'accès aléatoire étant relié au cœur de réseau cellulaire.

5. Système (10) selon la revendication 4, dans lequel les stations de base (310) cellulaires et les stations de base (320) d'accès aléatoire du réseau d'accès aléatoire sont configurées pour utiliser des protocoles de couche physique différents pour les canaux physiques d'accès coordonné et pour les canaux physiques permanents d'accès aléatoire.

6. Système (10) selon l'une des revendications 4 à 5, dans lequel les terminaux (20) et les stations de base (320) d'accès aléatoire du réseau d'accès (32) aléatoire sont configurés pour échanger des données sous la forme de signaux radio à bande ultra-étroite.

7. Système (10) selon l'une des revendications précédentes, comportant un serveur de localisation cellulaire mémorisant, pour chaque terminal (20), une information de localisation représentative de la position dudit terminal par rapport au réseau d'accès (31) cellulaire, ledit serveur de localisation cellulaire étant configuré pour mettre à jour l'information de localisation d'un terminal en fonction d'un message d'accès aléatoire émis par ledit terminal sur le canal physique permanent d'accès aléatoire et reçu par une station de base (320) d'accès aléatoire.

8. Procédé (50) de gestion de mobilité d'un terminal (20) d'un système (10) de communication sans fil selon l'une des revendications 1 à 7, ledit système comportant un serveur de localisation cellulaire mémorisant une information de localisation représentative de la position dudit terminal par rapport au réseau d'accès cellulaire, **caractérisé en ce qu'**il comporte :
- une émission (51), par le terminal (20), d'un message d'accès aléatoire sur le canal physique permanent d'accès aléatoire sans qu'une synchronisation temporelle ne soit nécessaire entre le terminal et une station de base (320) d'accès aléatoire,
- une réception (52), par au moins une station de base (320) d'accès aléatoire, du message d'accès aléatoire émis par ledit terminal,
- une détermination (53) d'une information de localisation actualisée dudit terminal (20) en fonction du message d'accès aléatoire reçu dudit terminal (20),
- une mise à jour (54), par le serveur de localisation cellulaire, de l'information de localisation du terminal (20) mémorisée dans ledit serveur de localisation cellulaire en fonction de l'information de localisation actualisée.

9. Procédé (50) selon la revendication 8, dans lequel l'information de localisation actualisée du terminal (20) est déterminée en fonction d'une information de localisation d'au moins une station de base (320) d'accès aléatoire ayant reçu ledit message d'accès aléatoire.

10. Procédé (50) selon l'une des revendications 8 à 9, comportant une évaluation (55), par le serveur de localisation cellulaire, d'un critère prédéfini de mobilité du terminal (20) par comparaison de l'information de localisation actualisée avec l'information de localisation mémorisée par ledit serveur de localisation cellulaire et, lorsque le critère de mobilité est vérifié :
- une émission (56), à destination du terminal (20), de paramètres d'accès au réseau d'accès (31) cellulaire à utiliser pour la position actuelle du terminal (20) par rapport au réseau d'accès cellulaire,
- une mémorisation (57), par le terminal (20), desdits paramètres d'accès au réseau d'accès cellulaire reçus.

11. Procédé (50) selon l'une des revendications 8 à 10, comportant des étapes préalables de connexion du terminal (20) avec le réseau d'accès cellulaire et de mise en veille d'un module de communication (21) cellulaire dudit terminal (20), le message d'accès aléatoire étant émis lorsque ledit module de communication cellulaire est en veille et lorsqu'un critère prédéfini d'émission, évalué par le terminal (20), est vérifié.

12. Procédé (50) selon l'une des revendications 8 à 11, dans lequel le message d'accès aléatoire comporte un code d'identification spécifique dudit terminal.

## Patentansprüche

1. Drahtloses Kommunikationssystem (10), das ein zellulares Zugangsnetzwerk (31) umfasst, das mit einem zellularen Netzwerkkern (30) verbunden ist, wobei das zellulare Zugangsnetzwerk sogenannte zellulare Basisstationen (310) umfasst, die geeignet sind, auf physikalischen Kanälen mit sogenanntem koordiniertem Zugriff Daten mit Endgeräten (20) auszutauschen, wobei jede zellulare Basisstation (310) eine geographische Zone (Zg1) bedient, wobei die Gesamtheit der geographischen Zonen, die von den zellularen Basisstationen bedient werden, eine geographische Region (Rg) bilden, **dadurch gekennzeichnet, dass** das drahtlose Kommunikationssystem (10) sogenannte Direktzugriffs-Basisstationen (320) umfasst, die die von dem zellularen Zugangsnetzwerk (31) bediente geographische Region bedienen, wobei jede Direktzugriffs-Basisstation (320) geeignet ist, Daten zu empfangen, die von Endgeräten auf einem permanenten, das heißt kontinuierlich, ohne zeitliche Unterbrechung bestehenden, physikalischen, sogenannten Direktzugriffskanal gesendet werden, wobei die permanenten physikalischen Direktzugriffskanäle der Direktzugriffs-Basisstationen in der ganzen geographischen Region die gleiche Funkressource verwenden und es einem Endgerät (20) ermöglichen, eine Direktzugriffsnachricht zu gleich welchem Zeitpunkt zu senden, ohne dass eine Zeitsynchronisation zwischen dem Endgerät und einer Direktzugriffs-Basisstation (320) erforderlich ist.

2. System (10) nach Anspruch 1, das ein Endgerät (20) umfasst, das so ausgelegt ist, dass es eine Direktzugriffsnachricht auf dem permanenten physikalischen Direktzugriffskanal sendet, wobei die Direktzugriffsnachricht einen Identifikationscode umfasst, der für das Endgerät spezifisch ist.

3. System (10) nach einem der vorstehenden Ansprüche, wobei es sich bei allen oder einem Teil der zellularen Basisstationen ebenfalls um Direktzugriffs-Basisstationen handelt.

4. System (10) nach einem der vorstehenden Ansprüche, wobei alle oder ein Teil der Direktzugriffs-Basisstationen ein sogenanntes Direktzugriffsnetzwerk bilden, das vom zellularen Zugangsnetzwerk getrennt ist, wobei das Direktzugriffsnetzwerk mit dem zellularen Netzwerkkern verbunden ist.

5. System (10) nach Anspruch 4, wobei die zellularen Basisstationen (310) und die Direktzugriffs-Basisstationen (320) des Direktzugriffsnetzwerks so ausgelegt sind, dass sie für die physikalischen Kanäle mit koordiniertem Zugriff und für die permanenten physikalischen Direktzugriffskanäle unterschiedliche Protokolle für physikalische Schichten verwenden.

6. System (10) nach einem der Ansprüche 4 bis 5, wobei die Endgeräte (20) und die Direktzugriffs-Basisstationen (320) des Direktzugriffsnetzwerks (32) so ausgelegt sind, dass sie Daten in Form von Ultra-Schmalband-Funksignalen austauschen.

7. System (10) nach einem der vorstehenden Ansprüche, das einen zellularen Standortserver umfasst, der für jedes Endgerät (20) eine Standortinformation speichert, die für die Position des Endgeräts in Bezug auf das zellulare Zugangsnetzwerk (31) repräsentativ ist, wobei der zellulare Standortserver so ausgelegt ist, dass er die Standortinformation eines Endgeräts in Abhängigkeit von einer Direktzugriffsnachricht, die von dem Endgerät auf dem permanenten physikalischen Direktzugriffskanal gesendet und von einer Direktzugriffs-Basisstation (320) empfangen wird, aktualisiert.

8. Verfahren (50) zur Mobilitätsverwaltung eines Endgeräts (20) eines drahtlosen Kommunikationssystems (10) nach einem der Ansprüche 1 bis 7, wobei das System einen zellularen Standortserver umfasst, der eine Standortinformation speichert, die für die Position des Endgeräts in Bezug auf das zellulare Zugangsnetzwerk repräsentativ ist, **dadurch gekennzeichnet, dass** es umfasst:
- Senden (51) einer Direktzugriffsnachricht durch das Endgerät (20) auf dem permanenten physikalischen Direktzugriffskanal, ohne, dass eine Zeitsynchronisation zwischen dem Endgerät und einer Direktzugriffs-Basisstation (320) erforderlich ist,
- Empfangen (52) der vom Endgerät gesendeten Direktzugriffsnachricht durch mindestens eine Direktzugriffs-Basisstation (320),
- Bestimmen (53) einer aktualisierten Standortinformation des Endgeräts (20) in Abhängigkeit von der Direktzugriffsnachricht, die von dem Endgerät (20) empfangen wurde,
- Aktualisieren (54) der im zellularen Standortserver gespeicherten Standortinformation des Endgeräts (20) durch den zellularen Standortserver in Abhängigkeit von der aktualisierten Standortinformation.

9. Verfahren (50) nach Anspruch 8, wobei die aktualisierte Standortinformation des Endgeräts (20) in Abhängigkeit von einer Standortinformation mindestens einer Direktzugriffs-Basisstation (320), welche die Direktzugriffsnachricht empfangen hat, bestimmt wird.

10. Verfahren (50) nach einem der Ansprüche 8 bis 9, das eine Überprüfung (55) eines vordefinierten Mobilitätskriteriums des Endgeräts (20) durch den zellularen Standortserver durch Vergleichen der aktualisierten Standortinformation mit der vom zellularen Standortserver gespeicherten Standortinformation umfasst, und, wenn das Mobilitätskriterium verifiziert wird:
- Senden (56) von Parametern für den Zugriff auf das zellulare Zugangsnetzwerk (31), die bei der aktuellen Position des Endgeräts (20) in Bezug auf das zellulare Zugangsnetzwerk verwendet werden sollen, an das Endgerät (20),
- Speichern (57) der empfangenen Zugriffsparameter für das zellulare Zugangsnetzwerk durch das Endgerät (20).

11. Verfahren (50) nach einem der Ansprüche 8 bis 10, das vorausgehende Schritte des Verbindens des Endgeräts (20) mit dem zellularen Zugangsnetzwerk und des Versetzens eines zellularen Kommunikationsmoduls (21) des Endgeräts (20) in Standby umfasst, wobei die Direktzugriffsnachricht gesendet wird, wenn sich das zellulare Kommunikationsmodul in Standby befindet und wenn ein vordefiniertes Sendekriterium, das vom Endgerät (20) überprüft wird, verifiziert wird.

12. Verfahren (50) nach einem der Ansprüche 8 bis 11, wobei die Direktzugriffsnachricht einen Identifikationscode umfasst, der für das Endgerät spezifisch ist.

## Claims

1. Wireless communication system (10) comprising a cellular access network (31) connected to a cellular network core (30), said cellular access network comprising base stations (310) called cellular base stations adapted to exchange data with terminals (20) on physical channels called coordinated access channels, each cellular base station (310) serving a geographical area (Zg1), all of the geographical areas served by said cellular base stations forming a geographical region (Rg), **characterised in that** the wireless communication system (10) comprises base stations (320) called random access base stations serving the geographical region served by the cellular access network (31), each random access base station (320) being adapted to receive data emitted by terminals on a permanent physical channel, i.e. existing continuously, without interruption in time, called random access channel, the permanent physical random access channels of said random access base stations using one same radio resource throughout the geographical region and allowing a terminal (20) to emit a random access message at any time without the need for time synchronization between the terminal and a random access base station (320).

2. System (10) according to claim 1 comprising a terminal (20) configured to emit a random access message on the permanent physical random access channel, said random access message comprising a specific identification code of said terminal.

3. System (10) according to one of the preceding claims, wherein all or some of the cellular base stations are also random access base stations.

4. System (10) according to one of the preceding claims, wherein all or some of the random access base stations form an access network called random access network, separate from the cellular access network, said random access network being connected to the cellular network core.

5. System (10) according to claim 4, wherein the cellular base stations (310) and the random access base stations (320) of the random access network are configured to use different physical layer protocols for the physical coordinated access channels and for the permanent physical random access channels.

6. System (10) according to one of claims 4 to 5, wherein the terminals (20) and the random access base stations (320) of the random access network (32) are configured to exchange data in the form of ultra-narrow band radio signals.

7. System (10) according to one of the preceding claims, comprising a cellular location server storing, for each terminal (20), an item of location information representative of the position of said terminal with respect to the cellular access network (31), said cellular location server being configured to update the location information of a terminal according to a random access message emitted by said terminal on the permanent physical random access channel and received by a random access base station (320).

8. Method (50) for managing mobility of a terminal (20) of a wireless communication system (10) according to one of claims 1 to 7, said system comprising a cellular location server storing an item of location information representative of the position of said terminal with respect to the cellular access network, **characterised in that** it comprises:
- an emission (51), by the terminal (20), of a random access message on the permanent physical random access channel without the need for time synchronization between the terminal and a random access base station (320),
- a reception (52), by at least one random access base station (320), of the random access message emitted by said terminal,
- a determination (53) of an item of updated location information of said terminal (20) according to the random access message received from said terminal (20),
- an updating (54), by the cellular location server, of the location information of the terminal (20) stored in said cellular location server according to the updated location information.

9. Method (50) according to claim 8, wherein the updated location information of the terminal (20) is determined according to an item of location information of at least one random access base station (320) having received said random access message.

10. Method (50) according to one of claims 8 to 9, comprising an evaluation (55), by the cellular location server, of a predefined mobility criterion of the terminal (20) by comparing the updated location information with the location information stored by said cellular location server and, when the mobility criterion is verified:
- an emission (56), sent to the terminal (20), of parameters for accessing the cellular access network (31) to be used for the current position of the terminal (20) with respect to the cellular access network,
- a storing (57), by the terminal (20), of said parameters for accessing the cellular access network received.

11. Method (50) according to one of claims 8 to 10, comprising prior steps of connecting the terminal (20) with the cellular access network and putting a cellular communication module (21) of said terminal (20) into standby, the random access message being emitted when said cellular communication module is on standby and when a predefined emission criterion, evaluated by the terminal (20), is verified.

12. Method (50) according to one of claims 8 to 11, wherein the random access message comprises a specific identification code of said terminal.
